Europäisches Patentamt

European Patent Office

Office européen des brevets

(19)

(11) Veröffentlichungsnummer: **0 262 383 B1**

(12)
# EUROPÄISCHE PATENTSCHRIFT

(45) Veröffentlichungstag der Patentschrift: **20.03.91**

(51) Int. Cl.⁵: **F16J 15/00, F16J 15/447**

(21) Anmeldenummer: **87112272.7**

(22) Anmeldetag: **25.08.87**

(54) **Getriebe und dgl. Vorrichtung.**

(30) Priorität: **03.10.86 DE 8626535 U**

(43) Veröffentlichungstag der Anmeldung:
**06.04.88 Patentblatt 88/14**

(45) Bekanntmachung des Hinweises auf die
Patenterteilung:
**20.03.91 Patentblatt 91/12**

(84) Benannte Vertragsstaaten:
**DE GB**

(56) Entgegenhaltungen:
**DE-A- 2 755 600**
**DE-A- 2 838 524**
**FR-A- 2 095 487**
**US-A- 3 727 923**

(73) Patentinhaber: **Carl Hurth Maschinen- und
Zahnradfabrik GmbH & Co
Moosacher Strasse 36
W-8000 München 40(DE)**

(72) Erfinder: **Eichinger, Johann
Edelweisstrasse 15
W-8011 Vaterstetten(DE)**

## Beschreibung

### Stand der Technik

Bei Getrieben für Straßenbahnen, U-Bahnen und ähnliche Schienenfahrzeuge werden am Austritt der Abtriebswelle aus dem Getriebegehäuse häufig Labyrinth-Dichtungen vorgesehen, um das Eindringen von Spritzwasser und Verschmutzungen in die Getriebe zu verhindern. Diese Dichtungen haben sich bewährt. Sie sind jedoch nicht ausreichend, wenn die Fahrzeuge überflutete Gleisanlagen befahren müssen, was verschiedentlich bei Hochwasser erforderlich ist. Für solche Einsatzfälle müssen mit Lippendichtungen ausgestattete Getriebe vorgesehen werden. Wegen des durch Staub, Schmutz u. dgl. Einflüsse bedingten Verschleißes der Dichtlippen erreichen solche Dichtungen in der Regel nur eine Standzeit, die kürzer ist als der Zeitraum zwischen zwei Revisionen der Fahrzeuge. Ein Auswechseln der Dichtungen innerhalb dieses Zeitraumes wird von den Fahrzeug-Betreibern wegen des enormen Aufwandes (die Antriebsräder und ggf. auch die Bremsscheiben und Gelenkkupplungen müssen dazu von den Achswellen abgezogen und später wieder aufgepreßt werden) und der damit verbundenen Kosten (längerer Ausfall des Fahrzeugs) als unzumutbar bezeichnet. Die Anordnung von zwei konzentrisch angeordneten, gleichzeitig wirkenden Lippendichtungen, wie sie aus der Druckschrift "FORSHEDA V-RING" der Fa. M. Merkel GmbH & Co KG Hamburg (1982), Seite 30 bekannt ist, läßt keine nennenswerte Standzeit-Verlängerung erwarten.

Aus der FR-A-2 095 487 ist eine Dichtungsanordnung mit zwei koaxial zueinander in einem stehenden Maschinenteil angeordneten Dichtringen bekannt, deren Dichtlippen mit Dichtflächen eines rotierenden Maschinenteils zusammenwirken, und zwar derart, daß zunächst nur der eine Dichtring wirksam und der andere funktionslos ist und daß zu einem späteren Zeitpunkt durch axiales Verschieben des stehenden Maschinenteils der zweite Dichtring auch oder statt des ersten Dichtringes wirksam gemacht wird.

### Aufgabe

Bei den eingangs genannten Getrieben für Schienenfahrzeuge läßt sich diese Anordnung von zunächst nur einer wirksamen und einer zunächst funktionslosen Dichtung wegen des dafür erforderlichen beträchtlichen Bedarfs an Bauraum in axialer Erstreckung nicht unterbringen. Deshalb liegt der Erfindung die Aufgabe zugrunde, ein Getriebe zu konzipieren mit einer Abdichtung, die dem bekannten Prinzip entspricht, aber weniger Bauraum benötigt, so daß sie insbesondere bei Schienenfahrzeug-Getrieben über einen langen Zeitraum hinweg befriedigend und betriebssicher funktioniert.

### Lösung

Diese Aufgabe wird gelöst mit einem Getriebe, das die kennzeichnenden Merkmale der Patentansprüche 1 oder 2 aufweist. In beiden Fällen besteht ein wesentlicher Unterschied zu der aus der genannten Druckschrift der Fa. Merkel bekannten Anordnung von zwei V-Ringen darin, daß nur einer davon wirksam ist, während der andere funktionslos ist, und zwar gewollt (der zweite V-Ring beim neuen Getriebe) oder ungewollt (der erste V-Ring im abgenutzten Zustand). Ein wesentlicher Unterschied zu der aus der FR-A-2 095 487 bekannten Anordnung ist in der gewählten Anordnung und Ausführung der Dichtringe zu sehen, nämlich daß ein im Durchmesser größerer V-Ring einen anderen radial umgibt, und daß nur der vorher funktionslose Dichtring, nicht aber das ganze, die beiden Dichtringe aufnehmende Maschinenteil verschoben werden muß.

Die zum Verschieben des zweiten V-Ringes vorgesehenen Einrichtungen sind bei den Ausführungen nach den Patentansprüchen 1 und 2 unterschiedlich. Zweckmäßige, aber trotzdem einfache Ausgestaltungen sind in den Unteransprüchen 3 bis 5 angegeben, während mit dem Kennzeichen des Anspruchs 6 eine vorteilhafte Weiterbildung aufgezeigt wird.

### Vorteile der Erfindung

Die erfindungsgemäße Getriebeabdichtung mit der Anordnung der V-Ringe gemäß Anspruch 1 oder 2 ermöglicht eine kurze Baulänge der Abdichtung; gerade bei im Drehgestell angeordneten Getrieben für Schienenfahrzeuge steht nämlich i.a. nur wenig Platz für die Motor-Getriebe-Verbindung zur Verfügung. Sie hat außerdem den wesentlichen Vorteil, daß anfänglich nur die eine Lippendichtung, d.h. der eine V-Ring, wirksam ist, während sich die zweite in einer funktionslosen Lage befindet. Erst zu einem späteren Zeitpunkt, beispielsweise nach Ablauf der ersten Hälfte des zwischen zwei Revisionen liegenden Zeitraumes, wird die zweite Dichtung in ihre wirksame Lage gebracht. Dies kann ohne großen Aufwand von außen bewerkstelligt werden, insbesondere brauchen keine Bauteile von den Achswellen abgezogen zu werden oder müßten andere Bauteile am Getriebegehäuse verschoben werden. Als weiterer wesentlicher Vorteil muß die Anordnung der V-Ringe in einem rotierenden Maschinenteil gesehen werden: der an den Dichtlippen und an der Dichtfläche auftretende Verschleiß wird auf ein Minimum reduziert, da der Anpreßdruck der Dichtlippen mit zunehmender Drehzahl abnimmt.

Das Verschieben des zweiten V-Ringes erfolgt in einfacher Weise mittels von außen zugänglicher Druckschrauben, die entweder direkt oder über eine Druckscheibe auf den V-Ring einwirken (Ansprüche 1 und 3). Das erforderliche Maß für die Verschiebung kann mittels entsprechend dicker Scheiben, die entfernt werden, problemlos eingehalten werden (Anspruch 4). Der zweite V-Ring kann auch nach Lösen entsprechender Halteschrauben mittels Federkraft in seine wirksame Position gebracht werden (Anspruch 2). Dabei ist ein Anschlag sehr nützlich (Anspruch 5). Zum Schutz des zweiten V-Ringes in seiner nicht wirksamen Lage sollen grobe Verunreinigungen etc. von ihm ferngehalten werden; andernfalls besteht die Gefahr, daß der zweite V-Ring schon beschädigt ist, ehe er wirksam werden soll. Dies läßt sich erreichen, wenn die beiden V-Ringe innerhalb eines bekannten Dicht-Labyrinths angeordnet sind (Anspruch 6).

Zeichnungen

Zwei Ausführungsbeispiele der Erfindung sind in den Zeichnungen dargestellt. Es zeigen

Fig. 1    einen Doppelachsantrieb für ein Schienenfahrzeug in stark vereinfachter Ausführung (die Erfindung ist aber auch für andere Anwendungsfälle brauchbar),

Fig. 2    einen Schnitt durch eine erfindungsgemäße Getriebeabdichtung mit der funktionslosen zweiten Dichtung,

Fig. 3    dieselbe Anordnung wie Fig. 2, jedoch mit der zweiten Dichtung in wirksamer Lage,

Fig. 4    eine gegenüber der Anordnung nach Fig. 2 abgeänderte Getriebeabdichtung, und

Fig. 5    einen V-Ring in nochmals vergrößerter Darstellung.

Beschreibung der Erfindungsbeispiele

An einem in Längsrichtung eines nicht gezeichneten Drehgestelles liegenden Antriebsmotor 1 ist beidseitig je ein Winkelgetriebe angeflanscht, dessen Gehäuse mit (2) bezeichnet ist. Die Kraftübertragung vom Motor (1) auf die Ritzelwelle (4) des Getriebes erfolgt über eine Zahnkupplung (3). Die Ritzelwelle (4) steht in Eingriff mit einem Tellerrad (5), das drehfest auf einer Hohlwelle (6) angebracht ist. Die Hohlwelle (6) ist - ebenso wie die Ritzelwelle (4) - mit bekannten und deshalb nicht dargestellten Mitteln drehbar, aber nicht axial verschiebbar im Gehäuse (2) gelagert. Die Hohlwelle (6) ragt beiderseits soweit aus dem Gehäuse (2) heraus, um erste Kupplungshälften (11) von elastischen Kupplungen (7,8) drehfest und axial nicht verschiebbar aufnehmen zu können. Zugehörige zweite Kupplungshälften sitzen, ebenfalls drehfest und axial nicht verschiebbar, auf einer Achswelle (9). Diese ist durch die Hohlwelle (6) hindurchgeführt und trägt an ihren Enden Antriebsräder (10) des Schienenfahrzeugs. Im entlasteten Zustand ist zwischen der Innenwandung der Hohlwelle (6) und der Mantelfläche der Radsatzachse soviel radiales Spiel wie für die Durchfederung der Antriebseinheit erforderlich ist, zuzüglich einer bestimmten Sicherheit. Die Lagerung des Radsatzes im Drehgestell ist ebensowenig dargestellt wie eine ggf. zwischen einer Gummigelenkkupplung auf jeder Radsatzachse und dem benachbarten Antriebsrad (10) angeordnete Scheibenbremse. Diese Elemente sind bekannt und für die Erfindung nicht von Bedeutung.

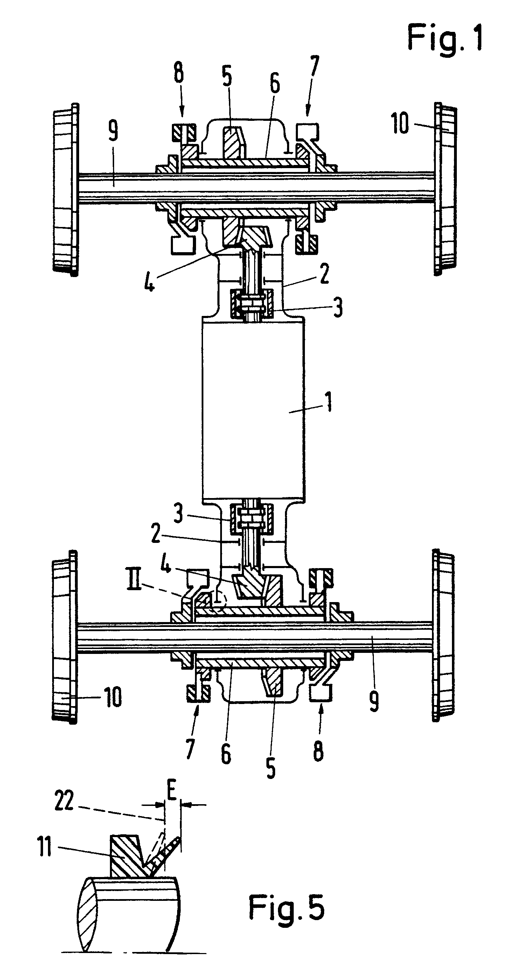

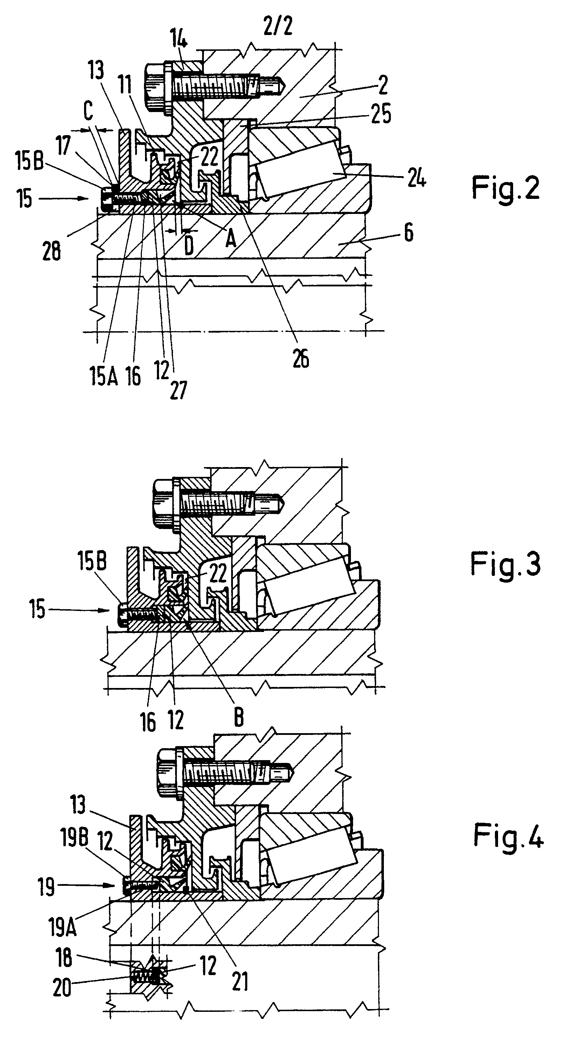

Der in Fig. 1 mit II bezeichnete Bereich ist in Fig. 2 detailliert dargestellt. Mittels Wälzlagern (24) ist die Hohlwelle (6) in Gehäuse (2) gelagert. Ein als Labyrinthring ausgestaltetes Maschinenteil (13) ist, ebenso wie ein weiterer Labyrinthring (26), auf die Hohlwelle (6) aufgeschrumpft. Es nimmt in axialen Eindrehungen einen ersten (11) und einen zweiten (12) V-Ring auf, wobei der erste den zweiten mit radialem Abstand umgibt. Die Lippe des ersten V-Rings (11) liegt an einer Dichtfläche (22) an, die zu einem als Labyrinthdeckel ausgestalteten anderen Maschinenteil (14) gehört, das am Gehäuse (2) angeschraubt ist und über eine Schwallscheibe (25) den Außenring des Wälzlagers (24) in axialer Richtung festlegt.

Mehrere Schrauben (15) sind in das Maschinenteil (13) so eingeschraubt, daß ihr Gewindeende (15A) an einer Druckscheibe (16) anliegt, die in der den zweiten V-Ring (12) in einer Lage A aufnehmenden Eindrehung (27) hinter dem V-Ring (12) eingelegt ist. Zwischen den Schraubenköpfen (15B) und dem Maschinenteil (13) sind Scheiben (17) eingelegt, deren Dicke C dem Abstand D der Dichtlippe des V-Rings (12) von der Dichtfläche (22) zuzüglich einem Maß E, um das der V-Ring (12) in seiner wirksamen Lage verformt wird, entspricht (Fig.5). Der zweite V-Ring (12) dient gewissermaßen als Ersatz-Dichtung, der erst dann zum Einsatz kommt, wenn der erste V-Ring (11) seine reguläre Lebensdauer erreicht hat. Die erfindungsgemäße Anordnung ermöglicht das, ohne irgendwelche Teile des Antriebsaggregats oder des Drehgestells demontieren zu müssen und auch bei beengten Raumverhältnissen. Dazu genügt es, die Schrauben (15) zu lockern, die mit einem Schlitz (28) versehenen Scheiben (17) zu entfernen und die Schrauben (15) einzuschrauben, bis ihre Köpfe (15B) am Maschinenteil (13) aufliegen (Fig.3). Die Druckscheibe (16) und mit ihr der zweite V-Ring (12) wird dabei im Sinne der Fig. 2 nach rechts in eine Lage B bewegt, wobei die Dichtlippe des V-Rings (12) an der Dichtfläche (22) zur Anlage kommt. Wenn man davon ausgeht, daß die Standzeit eines V-Ringes mindestens 2 bis 3 Jahre beträgt, dann genügt es, beide V-Ringe (11,12) anläßlich einer alle 5 bis 6 Jahre stattfindenden Revision zu erneuern und dabei den zweiten V-Ring (12) zunächst wieder in der Lage A nach Fig. 2 einzubauen.

Eine etwas andere Anordnung des zweiten V-Rings (12) ist in Fig. 4 gezeigt, und zwar wieder in der Stellung A. Die hier mit (19) bezeichneten Schrauben durchdringen das Maschinenteil (13) und sind mit ihren Gewindeenden (19A) in eine Druckscheibe (18) eingeschraubt. Die Schraubenköpfe (19B) liegen am Maschinenteil (13) auf. Zwischen den Schrauben (19) sind im Maschinenteil (13) Druckfedern (20) angeordnet, die zunächst zusammengedrückt sind. Um den zweiten V-Ring (12) bei Verschleiß des ersten V-Rings (11) oder etwa nach Ablauf der halben Revisionsfrist in die wirksame Stellung B zu bringen, werden die Schrauben (19) entfernt. Die Druckfedern (20) schieben dann die Druckscheibe (18) im Sinne der Fig. 4 nach links, wodurch der zweite V-Ring in die hier nicht gezeigte Stellung B gebracht wird. Damit die Dichtlippen nicht zu stark gegen die Dichtfläche (22) gedrückt werden, ist ein Anschlag (21) in Form eines Sprengringes vorgesehen.

Mit den beschriebenen Dichtungsanordnungen wird die normalerweise nur vorhandene Labyrinthdichtung wirkungsvoll unterstützt. Der an den Dichtlippen und an der Dichtfläche (22) auftretende Verschleiß wird dabei auf ein Minimum reduziert, da die V-Ringe im umlaufenden Teil des Labyrinths untergebracht sind und der Anpreßdruck der Dichtlippen mit zunehmender Drehzahl abnimmt.

Die Erfindung ist nicht auf die gezeigten und beschriebenen Anwendungs- und Ausführungsbeispiele beschränkt. Es sind auch Varianten möglich. So kann z.B. jeder V-Ring (11,12) eine eigene Dichtfläche haben; oder die V-Ringe sind axial zueinander versetzt.

Begriffsliste

1 Antriebsmotor
2 Gehäuse
3 Zahnkupplung
4 Ritzelwelle
5 Tellerrad
6 Hohlwelle
7 elastische Kupplung
8 elastische Kupplung
9 Achswelle
10 Antriebsrad
11 erster V-Ring
12 zweiter V-Ring
13 Maschinenteil
14 Maschinenteil
15 Schraube
15A Gewindeende
15B Schraubenkopf
16 Druckscheibe
17 Scheibe
18 Druckscheibe
19 Schraube
19A Gewindeende
19B Schraubenkopf
20 Druckfeder
21 Anschlag
22 Dichtfläche
23
24 Wälzlager
25 Schwallscheibe
26 Labyrinthring
27 Eindrehung
28 Schlitz
A nicht wirksame Lage von 12
B wirksame Lage von 12
C Dicke von 17
D Abstand
E Verformung

## Ansprüche

1. Getriebe und dgl. Vorrichtung mit einer Abdichtung zwischen einem stehenden und einem rotierenden Maschinenteil zum Schutz eines Innenraumes gegen von außen eindringendes Wasser und Verschmutzungen, insbesondere Getriebe für Schienenfahrzeuge, mit einem ersten und einem zweiten koaxial zueinander in dem einen Maschinenteil angeordneten Dichtring, die beide mit Dichtflächen am anderen Maschinenteil zusammenwirken und von denen der eine in einer wirksamen Lage festgelegt ist und der zweite mittels einer von außen betätigbaren Vorrichtung zwischen einer nicht wirksamen Lage (A) und einer wirksamen Lage (B) verschiebbar angeordnet ist, dadurch gekennzeichnet, daß

   a) die Dichtringe im rotierenden Maschinenteil (13) axial zueinander versetzt aufgenommene V-Ringe (11, 12) sind, von denen der erste V-Ring (11), dessen Lippe an einer stirnseitigen Dichtfläche (22) des stehenden Maschinenteils (14) anliegt, den zweiten V-Ring (12) zumindest teilweise mit radialem Abstand umgibt, und

b) in das rotierende Maschinenteil (13) von außen Schrauben (15) eingeschraubt sind, deren Gewindeenden (15A) an dem zweiten V-Ring (12) anliegen und deren Einschraubtiefe die Lage des zweiten V-Rings (12) bestimmen, dessen Lippe in der nicht wirksamen Lage (A) von der Dichtfläche (22) axial beabstandet ist.

2. Getriebe und dgl. Vorrichtung mit einer Abdichtung zwischen einem stehenden und einem rotierenden Maschinenteil zum Schutz eines Innenraumes gegen von außen eindringendes Wasser und Verschmutzungen, insbesondere Getriebe für Schienenfahrzeuge, mit einem ersten und einem zweiten koaxial zueinander in dem einen Maschinenteil angeordneten Dichtring, die beide mit Dichtflächen am anderen Maschinenteil zusammenwirken und von denen der eine in einer wirksamen Lage festgelegt ist und der zweite mittels einer von außen betätigbaren Vorrichtung zwischen einer nicht wirksamen Lage (A) und einer wirksamen Lage (B) verschiebbar angeordnet ist, dadurch gekennzeichnet, daß

a) die Dichtringe im rotierenden Maschinenteil (13) axial zueinander versetzt aufgenommene V-Ringe (11, 12) sind, von denen der erste V-Ring (11), dessen Lippe an einer stirnseitigen Dichtfläche (22) des stehenden Maschinenteils (14) anliegt, den zweiten V-Ring (12) zumindest teilweise mit radialem Abstand umgibt,

b) das rotierende Maschinenteil (13) von in eine zwischen das Maschinenteil (13) und den zweiten V-Ring (12) eingelegte Druckscheibe (18) eingeschraubte und mit ihren Köpfen (19B) am Maschinenteil (13) anliegende Schrauben (19) durchdrungen ist, und

c) zwischen dem Maschinenteil (13) und der Druckscheibe (18) Druckfedern (20) angeordnet sind, die die Druckscheibe in axialer Richtung beaufschlagen, wobei

d) die Lippe des zweiten V-Rings (12) in der nicht wirksamen Lage (A) von der Dichtfläche (22) axial beabstandet ist.

3. Getriebe und dgl. Vorrichtung nach Anspruch 1, gekennzeichnet durch eine zwischen die Gewindeenden (15A) der Schrauben (15) und den zweiten V-Ring (12) eingelegte Druckscheibe (16).

4. Getriebe und dgl. Vorrichtung nach Anspruch 1 oder 3, gekennzeichnet durch in der nicht wirksamen Lage (A) des zweiten V-Rings (12) zwischen die Schraubenköpfe (15B) und das rotierende Maschinenteil (13) eingelegte Scheiben (17), deren Dicke (C) der Summe aus dem maximalen Abstand (D) der Lippe des zweiten V-Ringes (12) von dem anderen Maschinenteil (14) und dem Maß (E) der axialen Verformung des zweiten V-Ringes (12) entspricht.

5. Getriebe und dgl. Vorrichtung nach Anspruch 2, gekennzeichnet durch einen Anschlag (21) für den zweiten V-Ring (12) in dessen wirksamer Lage (B).

6. Getriebe und dgl. Vorrichtung nach mindestens einem der Ansprüche 1 bis 5, dadurch gekennzeichnet, daß sowohl der erste V-Ring (11) als auch der zweite V-Ring (12) innerhalb eines von mindestens einer LabyrinthDichtung (13,14; 14,26) abgedichteten Raumes angeordnet sind.

## Claims

1. Gearing and suchlike device with a seal between a stationary and a rotating machine part for the protection of an interior space against water and contamination penetrating from outside, in particular gearing for rail vehicles, with a first and a second sealing ring arranged coaxially to each other in the one machine part, which sealing rings both cooperate with sealing surfaces on the other machine part and of which sealing rings one is fixed in an operative position and the second is arranged so as to be displaceable by means of a device operable from outside between an inoperative position (A) and an operative position (B), characterised in that

a) the sealing rings are V-rings (11, 12) which are received in the rotating machine part (13) and are offset axially in relation to each other, of which the first V-ring (11), whose lip rests against an end-face sealing surface (22) of the stationary machine part (14), surrounds the second V-ring (12) at least partially with a radial spacing, and

b) screws (15) are screwed into the rotating machine part (13) from outside, the thread ends (15A) of which screws rest against the second V-ring (12) and the screw depth of which determines the position of the second V-ring (12) whose lip in the inoperative position (A) is spaced axially from the sealing surface (22).

2. Gearing and suchlike device with a seal between a stationary and a rotating machine part for the protection of an interior space against water and contamination penetrating from outside, in particular gearing for rail vehicles, with a first and a second sealing ring arranged coaxially to each other in the one machine part, which sealing rings both cooperate with sealing surfaces on the other machine part and of which sealing rings one is fixed in an operative position and the second is arranged so as to be displaceable by means of a device operable from outside between an inoperative position (A) and an operative position (B), characterised in that
   a) the sealing rings are V-rings (11, 12) which are received in the rotating machine part (13) and offset axially in relation to each other, of which the first V-ring (11), whose lip rests against an end-face sealing surface (22) of the stationary machine part (14), surrounds the second V-ring (12) at least partially with a radial spacing,
   b) the rotating machine part (13) is penetrated by screws (19) screwed into a pressure disc (18), inserted between the machine part (13) and the second V-ring (12), the heads (19B) of these screws resting against the machine part (13), and
   c) compression springs (20) are arranged between the machine part (13) and the pressure disc (18), which compression springs act upon the pressure disc in an axial direction,
   d) the lip of the second V-ring (12) in the inoperative position (A) being spaced axially from the sealing surface (22).

3. Gearing and suchlike device according to Claim 1, characterised by a pressure disc (16) inserted between the thread ends (15A) of the screws (15) and the second V-ring (12).

4. Gearing and suchlike device according to Claim 1 or 3, characterised by discs (17) inserted between the screw heads (15B) and the rotating machine part (13) in the inoperative position (A) of the second V-ring (12), the thickness (C) of which discs corresponds to the sum of the maximum distance (D) of the lip of the second V-ring (12) from the other machine part (14) and the magnitude (E) of the axial deformation of the second V-ring (12).

5. Gearing and suchlike device according to Claim 2, characterised by a stop (21) for the second V-ring (12) in its operative position (B).

6. Gearing and suchlike device according to at least one of Claims 1 to 5, characterised in that both the first V-ring (11) and the second V-ring (12) are arranged within a space sealed by at least one labyrinth seal (13,14; 14,26).

**Revendications**

1. Dispositif de transmission et dispositif analogue avec un étanchement entre une partie de maChine fixe et une partie de machine tournante, pour protéger un espace interne contre la pénétration d'eau et de souillures depuis l'extérieur, notamment dispositif de transmission pour véhicules sur rails, avec un premier et un second anneau d'étanchéité disposés coaxialement l'un par rapport à l'autre dans une des parties de machine et coopérant tous deux avec des surfaces d'étanchéité sur l'autre partie de machine, l'un de ces anneaux étant fixé dans une position efficace tandis que le second peut être déplacé entre une position non efficace (A) et une position efficace (B) par un moyen susceptible d'être actionné de l'extérieur, dispositif caractérisé en ce que :
   a) les anneaux d'étanchéité dans la partie de machine tournante (13) sont des anneaux en V (11, 12) décalés axialement l'un par rapport a l'autre, dont le premier anneau (11), dont la lèvre s'applique contre une surface d'étanchéité (22) du côté frontal de la partie de machine fixe (14), entoure le second anneau en V (12), tout au moins partiellement, à une certaine distance radiale,
   b) dans la partie de machine tournante (13) sont vissées, à partir de l'extérieur, des vis (15), dont les extrémités filetées (15A) s'appliquent sur le second anneau en V (12) et dont les profondeurs de vissage déterminent la position de ce second anneau en V (12), dont la lèvre, dans la position non efficace (A), est à une certaine distance axiale de la surface d'étanchéité (22).

2. Dispositif de transmission et dispositif analogue, avec un étanchement entre une partie de machine fixe et une partie de machine tournante, pour protéger un espace interne contre la pénétration d'eau et de souillures depuis l'extérieur, notamment dispositif de transmission pour véhicules sur rails, avec un premier et un second anneau d'étanchéité disposés coaxialement l'un par rapport à l'autre dans une des parties de machine et coopérant tous deux avec des surfaces d'étanchéité sur l'autre partie de machirìe, l'un de ces anneaux étant fixé dans une position efficace tandis que le second peut être déplacé entre une position non efficace (A) et une position efficace (B) par un moyen susceptible d'être actionné de l'extérieur, dispositif caractérisé en ce que :

a) les anneaux d'étanchéité dans la partie de machine tournante (13) sont des anneaux en V (11, 12) décalés axialement l'un par rapport à l'autre, dont le premier anneau (11), dont la lèvre s'applique contre une surface d'étanchéité (22) du côté frontal de la partie de machine fixe (14), entoure le second anneau en V (12), tout au moins partiellement, à une certaine distance radiale,

b) la partie de machine tournante (13) est traversée par des vis (19), vissées dans un disque de pression (18) inséré entre cette partie de machine (13) et le second anneau en V (12), et dont les têtes (19B) s'appliquent sur la partie de machine (13),

c) entre la partie de machine (13) et le disque de pression (18), sont disposés des ressorts de pression (20) qui sollicitent le disque de pression en direction axiale,

d) la lèvre du second anneau en V (12), dans la position non efficace (A), est à une certaine distance axiale de la surface d'étanchéité (22).

3. Dispositif de transmission et dispositif analogue, selon la revendication 1, caractérisé en ce qu'un disque de pression (16) est inséré entre les extrémités filetées (15A) des vis (15) et le second anneau en V (12).

4. Dispositif de transmission et dispositif analogue, selon la revendication 1 ou la revendication 3, caractérisé en ce que, dans la position non efficace (A) du second anneau en V (12), des rondelles (17) sont insérées entre les têtes de vis (15B) et la partie de machine tournante (13), et l'épaisseur totale (C) de ces rondelles correspond à la somme de la distance maximale (D), entre la lèvre du second anneau en V (12) et l'autre partie de machine (14), et la grandeur (E) de la déformation axiale du second anneau en V (12).

5. Dispositif de transmission et dispositif analogue, selon la revendication 2, caractérisé en ce qu il est prévu une butée (21) pour le second anneau en V (12) dans sa position efficace.

6. Dispositif de transmission et dispositif analogue, selon au moins une des revendications 1 à 5, caractérisé en ce qu'aussi bien le premier anneau en V (11) qu'également le second anneau en V (12) sont disposés à l'intérieur d'une chambre étanchée par au moins un joint d'étanchéité en labyrinthe (13, 14; 14, 26).

# Fig.1

# Fig.5

2/2

Fig.2

Fig.3

Fig.4